# EUROPEAN PATENT SPECIFICATION

(11) **EP 2 012 623 B1**
(45) Date of publication and mention of the grant of the patent: **16.09.2009**
(21) Application number: 07736810.8
(22) Date of filing: 26.04.2007
(51) Int. Cl.: A47C 27/14

(54) **PROCESS FOR PREPARING AN APPARATUS COMPRISING A GEL LAYER**
VERFAHREN ZUR HERSTELLUNG EINES GERÄTS MIT EINER GELSCHICHT
PROCÉDÉ PERMETTANT DE PRÉPARER UN APPAREIL COMPRENANT UNE COUCHE DE GEL

(30) Priority: 25.04.2006 US 745564 P
(43) Date of publication of application: 14.01.2009
(73) Proprietor: Technogel Italia S.R.L., 36050 Pozzoleone (VI) (IT)
(72) Inventor: MASON, Matteo, 35010 Limena (PD) (IT); LOSIO, Massimo, 31011 Asolo (TV) (IT)
(74) Representative: Feltrinelli, Secondo Andrea
(86) International application number: PCT/IT2007/000307
(87) International publication number: WO 2007/122664

(56) References cited:
- EP-A1- 1 421 878
- EP-A2- 1 060 859
- JP-A- 61 044 625
- US-A- 3 187 069
- US-A1- 2003 061 663

## Description

### FIELD OF THE INVENTION

The present invention is generally directed to methods of preparing apparatuses designed for bodily support. In particular, the invention is directed to methods of preparing apparatuses comprising a gel layer and an additional layer, such as a foam layer.

### BACKGROUND

Multiple apparatuses are known in the art for providing support to the body of a user. Such apparatuses generally comprise one or more layers of padding or cushioning to provide functional support of the user's body and to provide such support while also providing a level of comfort. Similarly, such apparatuses may also comprise mechanical supports, such as coil springs.

Advances in the art are generally directed to apparatuses that provide the functional support necessary in such apparatuses but also provide increased comfort or provide a decrease in the volume of materials necessary to provide the support. For example, United States Patent No. 6,701,556 to Romano et al. discloses mattress or cushion structures designed to improve pressure distribution while reducing the overall thickness of the mattress or cushion. Further, U.S. Patent No. 6,804,848 to Rose discloses an air support sleep system having an upper mattress air posturizing module and an adjustable air posturizing sleep surface.

While the apparatuses commonly used for bodily support may provide functional support, they yet fail to provide a level of comfort useful for facilitating restfulness or sleep, or for providing a greatest relief of pressure for the body parts in contact with the support surface. Gel materials are generally known to provide good physical comfort and pressure relief. Further, gels are also known to exhibit a relatively high thermal conductivity. Accordingly, gels, such as polyurethane gels, are generally regarded as having a "cool" feel to the body, as body heat is perceptibly moved away from the body when in contact with the gel.

In light of the desirable properties afforded by gel materials, it is not surprising that demand for support apparatuses comprising gels continues to increase. However, there has heretofore yet not been provided a method for preparing support apparatuses comprising a gel layer in a manner that is both cost effective and efficient.

EP-A2-1060859 discloses in figures 1 to 5 a prior art method having all the features of the preamble of the claim 1.

Accordingly, there still remains u need in the field for method of preparing apparatuses useful for bodily support that comprise a gel layer. Such methods are provided by the present invention.

### SUMMARY OF THE INVENTION

The present invention provides various methods for preparing a support apparatus, such as a mattress. The apparatus prepared according to the invention generally comprises a gel layer. In further embodiments, the apparatus comprises a gel layer in combination with a foam layer. The inventive methods provide for preparation of a variety of support apparatuses and find particular use in the preparation of mattresses.

The invention is directed to a method for preparing a support apparatus, such as a mattress, according to claim 1.

According to another embodiment, the method of the invention for preparing a support apparatus comprises the following steps: providing a first foam layer comprising a foam piece having a surface with one or more cavities formed therein; inserting a gel material into the one or more cavities in the surface of the foam piece; and at least partially curing the gel material to form one or more gel layers. This method of the invention is particularly characterized in that the foam layer of the support apparatus can function not only as a layer of the apparatus but also as the mold for the gel material. Further, the cavities in the foam can be prepared to be of a size, shape, and distribution such that a wide variety of apparatus gel/foam combinations can be prepared according to desired specifications and uses.

According to yet another embodiment, the method of the invention for preparing a support apparatus comprising the following steps: providing a mold useful for molding one or both of a gel material and a foam material; placing a release layer in the mould; inserting a gel material into a portion of the mould adapted for receiving a gel material; at least partially curing the gel material to form a gel layer; inserting a foam material into a portion of the mold adapted for receiving a foam material; and curing the foam material to form a foam layer. Optionally, the step of curing the gel material can be carried out simultaneously with the step of curing the foam material, thereby forming both the gel layer and the foam layer simultaneously and, further optionally, chemically bonding the gel layer and the foam layer during the simultaneous curing step. In further embodiments, the method can further comprise the step of placing a release layer in the mold prior to the step of inserting the gel material into the mold.

In still another embodiment, the invention provides another method for preparing a support apparatus comprising a foam layer and a gel layer. According to this embodiment, the method comprises the following steps: providing a first foam layer comprising a foam piece with a surface that is at least partially convoluted; and applying a gel material to the convoluted surface of the foam layer to form a gel layer attached to the foam layer. In further embodiments, the method can comprise the step of affixing a cover layer to the apparatus. In a specific embodiment, the cover layer can comprise a second foam layer.

According to the various methods of the invention, the gel material used in the gel layer can be any gel material that, in a cured form, is non-toxic to a potential user and that provides beneficial and comfortable physical properties. In particular, the gel material may comprise a gel having specific physical properties identified as providing increased support pressure and relief to a user, and also providing a user with an increased perception of comfort (*i.e*., a good "feel"). Further, in the support apparatuses prepared according to the inventive methods, the gel layer can be the outermost layer of the apparatus, therefore being in direct contact with the user. According to further embodiments, the apparatus can also comprise a covering overlying the gel layer. Preferably, the covering layer is not of structure or thickness to substantially reduce or mask the comfort and support provided by the gel layer. Non-limiting examples of coverings encompassed by the invention include a textile layer, a film layer, a coating layer, and a foam layer.

In addition to the gel and foam layers described in the illustrative embodiments noted above, the methods of the invention further encompass preparation of support apparatuses comprising one or more additional support layers. These additional support layers can include any type of support material generally known in the art of bodily support apparatuses, particularly in the art of mattresses and seating apparatuses. For example, the one or more additional support layers may include one or more of the following: a foam layer; a spring layer; a textile layer; a gas layer, a wood layer, a metal layer, and a plastic layer. Accordingly, the apparatus prepared according to the methods of the invention finds use in a wide variety of supports. For example, an apparatus prepared according to the invention could be used for supporting the entire body or only a portion of the body. As such, the apparatus finds use in home settings, such as bedding or seating, in office settings, such as chair seats, chair back rests, chair arm rests, keyboard wrist rests, and the like, in transportation, such as car seats or other interior components, medical settings, such as bedding, wheelchairs, and clothing, particularly footwear, as well as other settings wherein comfort or pressure relief are to be maximized. In one particular embodiment, the method of the invention is used in the preparation of a mattress. Non-limiting examples of further support apparatuses prepared according to the methods of the invention include seating apparatuses, pillows, mattress toppers, footwear cushions (or insoles), arm pads, and wrist pads.

According to another embodiment, the gel layer, in addition to the gel, may further comprise a content of one or more fillers. Such fillers are particularly useful in modifying the thermal conductivity of the gel used in the gel layer. As previously noted, gels are typically characterized by a "cool" feel, in part arising from the thermal conductivity of the gel in that it transports heat away from a warmer object in contact with the gel, such as the body of a user. The fillers used in the gel layer are preferentially capable of reducing the thermal conductivity of the gel, thereby allowing the gel to exhibit a feel to a user that is less "cool".

Various types of filler can be used with the methods of the invention. The filler material should generally be non-reactive with the gel, or with possible derivatives of the gel or the precursors thereof (*e.g*., isocyanates and polyols in the case of polyurethane gels). Preferably, the filler is a material capable of beneficially affecting one or more physical characteristics of the gel including, but not limited to, the thermal conductivity of the gel. In one particular embodiment of the invention, the filler material is selected from the group consisting of cork pieces, cork flour, wood pieces, wood chips, foam flakes, textile fibers, textile pieces, paraffins, hollow spheres, synthetic microspheres, mineral particles, glass beads, gasses, active agents, nanoparticles, and mixtures thereof.

### BRIEF DESCRIPTION OF THE DRAWINGS

Having thus described the invention in general terms, reference will now be made to the accompanying drawings, which are not necessarily drawn to scale, and wherein:
FIG. 1 is a perspective view of a vacuum-assist mold illustrating a mattress formed therein having a gel layer and a foam layer, said layers being partially cut away to reveal the underlying detail;
FIG. 2 is perspective view of a support apparatus prepared according to one embodiment of the invention comprising a cavity foam layer, wherein the cavities are filled with a gel layer;
FIG. 3 is a perspective of another support apparatus prepared according to one embodiment of the invention comprising a cavity foam layer, wherein the cavities are filled with a gel layer; and
FIG. 4 is a cross-sectional view of a support apparatus prepared according to one embodiment of the invention comprising a foam layer having a convoluted surface covered with a gel layer.

### DETAILED DESCRIPTION OF THE INVENTION

The present invention will be described more fully hereinafter in connection with preferred embodiments of the invention which are given so that the present disclosure will be thorough and complete and will fully convey the scope of the invention to those skilled in the art. However, it is to be understood that this invention may be embodied in many different forms and should not be construed as being limited to the specific embodiments described herein. Although specific terms are used in the following description, these terms are merely for purposes of illustration and are not intended to define or limit the scope of the invention. Like numbers refer to like elements throughout. As used in this specification and the claims, the singular forms "a," "an," and "the" include plural referents unless the context clearly dictates otherwise.

The present invention provides methods for preparing an apparatus useful for bodily support, particularly support that, in addition to being functional, also provides increased comfort and pressure point relief for a user. The methods of the invention generally comprise providing a mold having one or more portions adapted for receiving a gel material, inserting a gel material into the mold, and curing the gel material to form a gel layer. Optionally, a foam layer may be added to the gel layer. In certain embodiments, the mold comprises a foam layer having a surface with one or more cavities adapted for receiving the gel material.

The gel material used in the methods of the invention can comprise any gel material that is stable, non-toxic, and generally known to provide a cushioning effect while maintaining a degree of structural stability and support. In particular, the gel can comprise any gel material having a hardness and elasticity that are within a preferred range, as more fully described herein.

Polyurethane gels are particularly useful according to the invention. Further, other gels that are resistant to hardening over time, have limited expandability, and are resistant to substance degradation (*e.g*., from migration of volatile agents, such as plasticizers) could also be useful as the gel material in the present invention. Preferably, the gels used according to the invention are also shock absorbent and resistant to vibration.

Polyurethanes are generally understood to be the product of the chemical reaction between a polyisocyanate compound and a polyfunctional alcohol (*i.e.,* a polyol). One example of a general reaction scheme for preparing a polyurethane compound is shown below: 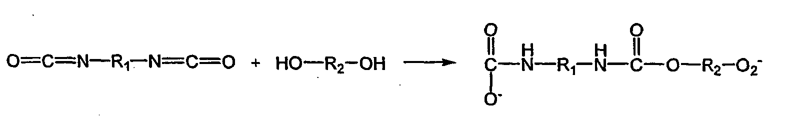 wherein R₁ and R₂ can be various organic groups including, but not limited to, straight or branched chain or cyclic alkyl, alkenyl, or alkynyl groups, as well as various aryl groups. Of course, the above scheme is provided only as an example of the preparation of the polyurethane compounds useful according to the invention and is not intended to be limiting thereof. Additional examples of polyurethane gels that may be useful in the methods of the invention are disclosed in United States Patent No. 6,191,216, United States Published Patent Application No. 2004/0058163 (Application Serial No. 10/618,558) and United States Published Patent Application No. 2004/0102573 (Application Serial No. 10/656,778), which are incorporated herein by reference. Examples of other types of gels useful according to the invention are disclosed in United States Patent No. 4,404,296, United States Patent No. 4,456,642, and United States Published Patent Application No. 2005/0186436 (Application Serial No. 11/058,339), which are incorporated herein by reference.

Gels, such as polyurethane gels, are generally recognized as imparting a balanced pressure distribution. Unlike standard padding materials, which react to an applied pressure, such as a user sitting or lying of the padding, by deforming along only the axis of the applied pressure (*i.e*., the axis perpendicular to the plane of the padding), gels tend to exhibit tri-dimensional deformation properties. In other words, the gel reacts to the applied pressure by deforming along three axes: the X and Y axes in the plane of the gel surface, as well as the Z axis that lies perpendicular to the plane of the gel surface. This leads to an even distribution of the exerted pressure, which lessens the pressure felt by the user at the pressure points. Accordingly, in addition to providing added comfort, the gel provides health advantages, such as increased blood circulation, encouragement of correct posture, and alleviation of pressure concentration, which can lead to serious conditions, such as bed sores, or other types of ulcerations.

The gel materials used in the methods of the invention may particularly be characterized by the specific physical properties they exhibit. For example, two physical properties specifically useful in characterizing the gel material are hardness and elasticity. Optimization of these two properties exhibited by the gels allows for preparation of a gel layer (and ultimately an overall apparatus) providing both objective and subjective comfort and support. In other words, gels according to the invention having a certain degree of hardness and a certain degree of elasticity provide therapeutic benefits (*i.e*., objective comfort), as previously described, but also provide a user with a good "feel" (*i.e*., subjective comfort). The ability to provide both objective and subjective comfort is particularly useful because a support apparatus designed to provide therapeutic benefit to a user may not always feel good to the user. Conversely, what feels good to a user may not always provide therapeutic benefit to the user. However, gel materials used in the methods of the present invention having a hardness and elasticity within the presently specified ranges provide both objective and subjective comfort.

A person skilled in the relevant arts would be expected to seek out material having a good perceived comfort for use in preparing a support apparatus. For example, such a skilled person would be expected to choose a material having a hardness providing subjective comfort to the user. However, only according to the present invention has it been found that merely optimizing a single material property, such as hardness, to provide a good feel to a user is insufficient to provide a support apparatus that provides both subjective and objective comfort for a user.

Based upon known technology, a skilled person may prepare an apparatus to have a physical property within a certain range of values. The present invention reveals, however, that such range can change when the underlying material is further optimized in relation to other values necessary to provide both subjective and objective comfort to a user. Accordingly, the values for the physical properties described herein have been established through testing and evaluation to balance off-setting nature of various gel physical properties and arrive at a desired gel formulation that provides a good feel to the user but also provides therapeutic benefit. This is a distinct advantage over the art in that changing a single physical property may lead to a support apparatus that is comfortable to one user but uncomfortable to another user and fails to provide therapeutic benefit to either user. The gel used in the present invention, however, is the culmination of rigorous testing to provide a gel material having hardness and hysteresis values that give the gel a good feel to a variety of users while also providing therapeutic benefit. As such, the range of values provided herein provide for a gel material having properties and effects that are unexpected in light of the know art and that provide distinct benefits not provided by gel materials having hardness and hysteresis values outside of the disclosed ranges.

Preferably, the gel material is characterized by having a low degree of hardness, such hardness being measurable as the force deflection of the gel at a specific compression. Gel hardness can be measured according to any known method, and a gel useful according to the invention can be identified as having a hardness in a specified range. One method particularly useful according to the invention for measuring gel hardness is the testing method ISO 3386-1 (year 1986 version), as designated by the International Organization for Standardization (ISO).

According to ISO 3386-1, a method is provided for the calculation of the compression stress value of various materials. The compression stress/strain characteristic is a measure of the load-bearing properties of the material, and the testing method provides two formulas for calculating the compression force deflection in kilopascals (kPa), which provides a measured hardness of the material.

Specifically, under the ISO 3386-1 standard, a gel according to the invention can be measured for a hardness determination through a compression load deflection test. In particular, a 5 cm x 5 cm x 2.5 cm gel sample is subjected to a compressive force, with a 70% maximum compression, and gel hardness is measured as the stress applied to the gel (in kPa) at 40% compression. Such testing would typically be performed after the gel material has been allowed to cure (*i.e*., formation of a gel layer).

A gel material useful in the methods of the invention has a low measurable hardness. Preferentially, the gel has a measurable hardness that is less than 90 kPa, more preferably less than 80 kPa, still more preferably less than 70 kPa, and most preferably less than 60 kPa. In one embodiment, the gel used in the invention has a measurable hardness in the range of about 0.5 kPa to about 50 kPa. According to further embodiments, the gel has a hardness in the range of about 1 kPa to about 40 kPa, about 1.5 kPa to about 30 kPa, or about 2 kPa to about 25 kPa.

The gel material used in the methods of the invention is further characterized by having a measurable elasticity that is within a specified range. In solid mechanics, a material is understood to behave elastically if it changes shape due to an applied load, and when the load is removed, the material recovers its original shape. The elasticity of a material is inversely proportional to its stiffness.

One method for evaluating the elasticity of a gel for use according to the invention is through determination of the hysteresis exhibited by the gel. Hysteresis is a property of systems (usually physical systems) that do not instantly follow the forces applied to them, but react slowly, or do not return completely to their original state. Hysteresis, then, can be evaluated as the ability of a material, such as a gel, to return to its original shape after removal of a force on the gel.

In one method for determining hysteresis, a force is applied to a gel, which leads to compression of the gel. The deflection of the force by the gel at 70% compression is measured, and the external force is removed, allowing the gel to decompress. The deflection of the gel under no compression (*i.e.,* after removal of the force) is then measured. The hysteresis of the gel (evaluated as a percentage) is the difference between the two force values at the defined deflections. Accordingly, a gel exhibiting a low hysteresis percentage would be expected to be highly elastic, in other words, have a rapid and significantly complete return to its original shape. A gel exhibiting a high hysteresis percentage would be expected to be less elastic, in other words have a more delayed and less complete return to its original shape. Again, according to the invention, such testing would typically be performed on a gel layer after the gel material has been allowed a sufficient time to cure or mature.

Preferably, the gel materials used in the inventive methods exhibit an elasticity (or percentage hysteresis) that is not temperature dependent. In particular, it is preferable for the gel material to have an elasticity that lacks temperature dependence within a range of temperatures that is well tolerated by potential users (*e.g*., temperatures in climactic conditions wherein a support apparatus incorporating the gel may be used). Even more particularly, the absence of temperature dependence is within a range of temperatures commonly found in dwellings (such as between about 50 °F and about 110 °F). In one embodiment, the gel used in the invention has a measurable hysteresis in the range of about 15% to about 80%. According to further embodiments, the gel has a hysteresis in the range of about 20% to about 70%, about 25% to about 60%, or about 30% to about 50%.

Gel materials are generally understood to have a relatively high thermal conductivity. High thermal conductivity can be a desirable gel property, such as in a warm environment where a cooling effect would be welcomed. In other situations, however, it may be more desirable to have a lower thermal conductivity in order to conserve heat near the body of the user. Advantageously, the gel materials used in the methods of the present invention can have a determinable thermal conductivity.

Thermal conductivity (λ), which is generally reported in terms of watts per meter per degree Kelvin (W · m⁻¹ · °K⁻¹), relates to the ability of a material to transmit heat under fixed conditions. The lower the value of λ, the better insulator the material will be. Conversely, the higher the value of λ, the better heat conductor the material will be.

Foam, a typical cushion material for support apparatuses, is known to be a material exhibiting good insulating properties. For example, molded foam, such as used for seat cushions, typically has a λ value of about 0.04 W · m⁻¹ · °K⁻¹, and foam used in construction and building materials typically has a λ value of about 0.022 W · m⁻¹ · °K⁻¹. When a highly insulating material, such as foam, is used in a support apparatus for human use, the heat generated by the human body, at first contact with the foam, is immediately transferred to the contact surface of the foam. With time, the transferred heat finds a high resistance to movement through the foam for dissipation. The energy (heat) produced continuously by the human body generates an increase in temperature because the,foam is unable to absorb the energy and transport it away from the contact area quickly enough. In other words, while the initial warmth maintained by the contact with the foam may be of a comfortable level, an eventual heat build-up leads to discomfort for the user.

Polyurethane gels, and similar gels as described herein, exhibit different thermal properties and can generally be considered good conductors of heat compared to foam. For example, a polyurethane gel can have a λ value of about 0.20 W·m⁻¹·°K⁻¹ or greater. Polyurethane gels also typically have a greater density than foam. For example, polyurethane gel can typically have a density in the range of about 600 to about 1,100 Kg/m³, while expanded foam for seat cushions can generally range from about 30 to about 85 Kg/m³. Further, polyurethane gels commonly have a high thermal capacity. This combination of increased ability to transport heat through the material, higher material mass per unit area, and high amount of energy needed to increase the material temperature makes a significant difference on the type of exchange of heat from the user to the gel over time.

The heat exchange capacity of the gel materials used in the methods of the invention therefore further contributes to the good "feel" users desire and appreciate in a support apparatus, such as a mattress, pillow, seating apparatus, or the like, which may be prepared according to the invention. Accordingly, the presence of the gel layer allows for increased comfort not only because of the pressure distribution qualities of the gel but also because of the thermal conductivity of the gel and the corresponding ability to move heat away from the body and therefore circumvent the eventual heat buildup associated with many support apparatuses that can lead to discomfort.

Beneficially, gels useful according to the invention can have their λ values altered through addition of one or more fillers. Filled gels are useful according to the invention because they can be used in a support apparatus to provide increased comfort and pressure distribution, as previously noted, while also having a lower thermal conductivity to lessen the movement of heat away from the body of the user. Such lowering of the λ value of the gel reduces the "coolness" of the gel. This can also increase the subjective comfort of the support apparatus for users who desire a feeling of warmth.

Accordingly, in one embodiment of the invention, the gel material used in the methods of the invention further comprises one or more fillers. The filler material can be any material capable of admixture with the gel and that is effective for altering the λ value of the gel. In a specific embodiment, the filler material is effective for lowering the λ value of the gel to at least a value indicative of a thermal conductivity wherein a perception of coolness of the gel is reduced. In yet another embodiment, the filler material is effective for lowering the λ value of the gel such that there is a perception of warmth from the gel. Accordingly, various types of materials ranging from solids to liquids may be used as filler for the gel used in the gel layer according to the invention.

In one embodiment of the invention, the filler comprises a solid material. Preferentially, the solid material comprises a particulate material. The average size of the particulate can vary depending upon the apparatus in which the filled gel is to be used and can also vary depending upon the λ value desired in the filled gel. In one embodiment, the filler can comprise coarse particles. In another embodiment, the filler can comprise fine particles (*i.e.,* powders). In yet another embodiment, the filler can comprise nanoparticles. In a particular embodiment of the invention, the filler material comprises particulates having an average diameter of about 0.05 mm to about 15 mm. In another embodiment, the particulates have an average diameter of about 0.10 mm to about 10 mm, about 0.10 mm to about 5 mm, or about 0.10 to about 1 mm.

In another embodiment of the invention, the filler material comprises hollow material, such as microspheres. Such hollow material can be natural or synthetic in origin, but are generally expected to be synthetically produced material. For example, the material can comprise synthetic microspheres. Such microspheres are preferably formed from a polymer material, such as a polyolefin, particularly an acrylonitrile copolymer or polyvinylchloride. In addition to the synthetic microspheres, other types of hollow materials having various geometries could also be used in the filled gel. For example, in addition to hollow materials that are generally spherical in nature (also described as being balloon-like), the hollow materials can also be in the form of tubular, rectangular, or other geometric shapes.

In another embodiment of the invention, the filler comprises a liquid, particularly an organic liquid. The liquid is preferably chemically inert to the gel used in the gel layer, as well as starting materials, intermediates, and by-products in the preparation of the gel (such as isocyanates and polyols in the case of polyurethane gels). Accordingly, the liquid filler is generally preferably selected from materials, such as plasticizers (including oils, resins, and hydrocarbon derivatives), hydrocarbons and fuels, alkylbenzenes, and liquid esters. More particularly, the liquid material can include amorphous or semicrystalline paraffins, naphthenic oils or resins, heavy and light fuels, alkylbenzenes, esters (preferentially products of polyhydric alcohols with monobasic carboxylic acids), alkylpolyaromatic compound, and vegetable oils, as well as combinations of the above liquids.

According to a further embodiment of the invention, the filler can comprise one or more gasses. For example, the filler can comprise ambient air. In other embodiments, the gas used as the filler material can comprise substantially pure gasses, such as nitrogen gas, or another inert gas, such as argon gas. The gas can also comprise gaseous compounds, such as carbon dioxide gas.

In still another embodiment of the invention, the filler can comprise one or more active agents. As used herein, active agents are intended to refer to any additive capable of providing a therapeutic benefit to a user. For example, the active agent can include vitamins, minerals, essential oils, perfumes, and the like.

The filler generally can comprise natural or synthetic materials. For example, the filler can comprise natural materials, such as cork, wood, sponge, natural fibers (*e.g*., cotton, wool, etc), minerals (*e.g*., mica, or other silicates, or other metal oxides, such as aluminates), pumice, and glass (including fibers, beads, etc.). Examples of synthetic materials useful as fillers in the present invention include synthetic fibers, synthetic microspheres, and various other synthetic materials. In one particular embodiment of the invention, the filler is selected from the group consisting of cork pieces, cork flour, wood pieces, wood chips, foam flakes, textile fibers, textile pieces, paraffins, hollow spheres, synthetic microspheres, mineral particles, glass beads, gasses, active agents, nanoparticles, and mixtures thereof.

The content of filler present in the gel can vary depending upon the particular method being used, the apparatus in which the filled gel is to be used, and the λ value desired in the filled gel. In one embodiment of the invention, the filler comprises about 5 percent to about 95 percent of the filled gel, on a volume basis. In another embodiment, the filler comprises about 10 percent to about 90 percent of the filled gel, on a volume basis. In still another embodiment, the filler comprises about 20 percent to about 80 percent of the filled gel, on a volume basis. In yet another embodiment, the filler comprises about 25% to about 75% of the filled gel, on a volume basis.

Depending upon the type of filler used in the filled gel and the content of the filler in the filled gel, the λ value of the filled gel can be altered from the λ value of the gel without the filler. Preferably, the presence of the filler in the filled gel causes the filled gel to exhibit a reduced λ value. In other words, it is preferable for the filled gel to have a thermal conductivity that is less than the thermal conductivity of the gel without the filler.

In one embodiment of the invention, the filled gel has a thermal conductivity of less than about 0.20 W · m⁻¹ · °K⁻¹. In another embodiment, the filled gel has a thermal conductivity of less than about 0.15 W · m⁻¹ · °K⁻¹. In still another embodiment, the filled gel has a thermal conductivity of less than about 0.10 W · m⁻¹ · °K⁻¹. In one particular embodiment of the invention, the filled gel has a thermal conductivity of less than or equal to about 0.08 W · m⁻¹ · °K⁻¹.

In addition to the gel layer (which may or may not include one or more fillers), a support apparatus prepared according to the methods of the invention further comprises one or more foam layers. The gel layer and the foam layer can be integrally attached or can be separate bodies. By integrally attached is intended to mean the layers are attached one to another by means such that the two layers are not separable without at least partially damaging one or multiple layers. For example, the layers may be integrally attached, such as by gluing, stapling, sewing, welding, or the like. Further, the layers may be integrally attached through chemical bonding. For example, when the gel layer comprises a polyurethane gel and the foam layer comprises a polyurethane foam, both layers have free isocyanate groups prior to curing (or maturation) of the gel or foam. Accordingly, when one layer is allowed to cure while adjacent the other layer, chemical bonding between the gel material and the foam material can occur.

Foam support layers are particularly useful in combination with a gel layer, not only because of ease of bonding, as described above, but also because of the various combinations provided. For example, in one embodiment, convoluted foam may be used. In another embodiment, the foam may have one or more cavities for receiving all or part of the gel layer. When such cavities are present, the cavities may be on a "top" surface of the foam, a "bottom" surface of the foam, or on both a top and bottom surface of the foam. As such, the top surface or the bottom surface may be particularly defined as the surface intended for contact with the body of a user.

A support apparatus prepared according to the methods of the invention can comprise apparatuses such as mattresses, chairs, sofas, recliners, wheelchairs, pillows, furniture cushions, office equipment, automobile parts, mattress toppers, and the like. Moreover, the methods of the invention can be used in the preparation of an apparatus in a substantially complete form (*i.e.,* requiring no further essential components to perform its support function) or can be used in the preparation of a component part of an apparatus (*i.e*., a component that can be combined with one or more further components to form a substantially complete support apparatus). For example, a mattress component could be a mattress topper that could be combined with an existing mattress.

In one particular embodiment, the invention provides a method of preparing a bed mattress, or a component thereof. In another embodiment, the invention provides a method of preparing a seating apparatus, or a component thereof. In still another embodiment, the invention provides a method of preparing a pillow, or a component thereof. In still another embodiment, the invention provides a method of preparing a mattress topper, or a component thereof.

In one embodiment of the invention, a method for preparing a support apparatus comprising a gel layer and a second layer is provided. In specific embodiments, the second layer comprises a foam layer. The method generally comprises providing a gel layer, providing a second layer, and affixing the gel layer to the second layer. The method can further comprise one or more steps related to preparing the gel layer, preparing the second layer, or preparing both the gel layer and the second layer. The method can still further comprise applying one or more further layers to the support apparatus, particularly in embodiments wherein the second layer is a foam layer.

The invention is particularly characterized in that the methods provided herein are fully adaptable to a number of different processing modes. For example, the methods of the invention can be used in continuous processing methods or can be used in discrete methods where individual articles are prepared. Such advantages are more fully described below in relation to particular embodiments of the invention; however, the invention is not limited to steps described only in relation to a particular embodiment. Rather, the methods of the invention may be adapted to particular manufacturing strategies and plans as would be envisioned by the skilled artisan.

The invention may incorporate the use of one or more molds. For example, in one particular embodiment, the method comprises providing a mold, inserting a gel material into the mold to form a gel layer, and affixing a cover layer to the gel layer. Optionally, the gel material may be at least partially cured (or matured) to form the gel layer prior to affixing the cover layer. In one particular embodiment, the cover layer is a foam layer. In another particular embodiment, the cover layer is a textile layer.

A mold used according to the invention can be any type of conventional mold that would be recognized as useful in forming one or both of a gel layer and a foam layer. The size of the mold can vary depending upon the support apparatus being prepared. Further, the size of the mold can vary depending solely upon the dimensions of the gel layer being prepared in the method. In one particular embodiment, wherein the apparatus being prepared is a mattress, the dimensions of the mold used are substantially similar to the dimension of the mattress being prepared. For example, a double (or full) size mattress generally has a width and length of about 54 inches by 75 inches. Accordingly, when preparing a mattress for a double bed, a mold used according to the invention would have similar dimensions. Thus, a support apparatus prepared according to the present invention to be a mattress can be prepared such that the apparatus is dimensioned to be a mattress (*i.e.*, have the length, width, and thickness of a standard mattress). In further embodiments, the support apparatus can be sized to have at least one dimension of a standard mattress size. For example, the support apparatus could be sized to the width of a mattress, the length of a mattress, or both the length and width of a mattress.

In further embodiments, the support apparatus can be specifically dimensioned for a specific application. For example, in one embodiment, the support apparatus can be prepared such that it is dimensioned to be a mattress topper. Accordingly, one of skill in the art would recognize such dimensions would be significantly equivalent to the length and width of a standard mattress (e.g., twin, double, queen, or king) but have a thickness in the range of about 0.1 cm to about 10 cm. In specific embodiments, the mattress topper can have a thickness in the range of about 0.2 cm to about 9 cm, about 0.3 cm to about 8 cm, about 0.4 cm to about 7 cm, about 0.5 cm to about 6 cm, about 0.1 cm to about 5 cm, about 0.25 cm to about 5 cm, or about 0.5 cm to about 5 cm.

In another embodiment, the support apparatus can be prepared such that it is dimensioned to be a pillow. Accordingly, one of skill in the art would recognize such dimensions would be significantly equivalent to the length, width, and thickness of a standard pillow (*e.g*., bed pillows, chair or sofa pillows, neck pillows, and therapeutic pillows).

In still another embodiment, the support apparatus can be prepared such that it is dimensioned to be a seat cushion. Accordingly, one of skill in the art would recognize such dimensions would be significantly equivalent to the length, width, and thickness of a standard seat cushion (*e.g*., sofa cushions, office chair cushions, and lounge chair cushions).

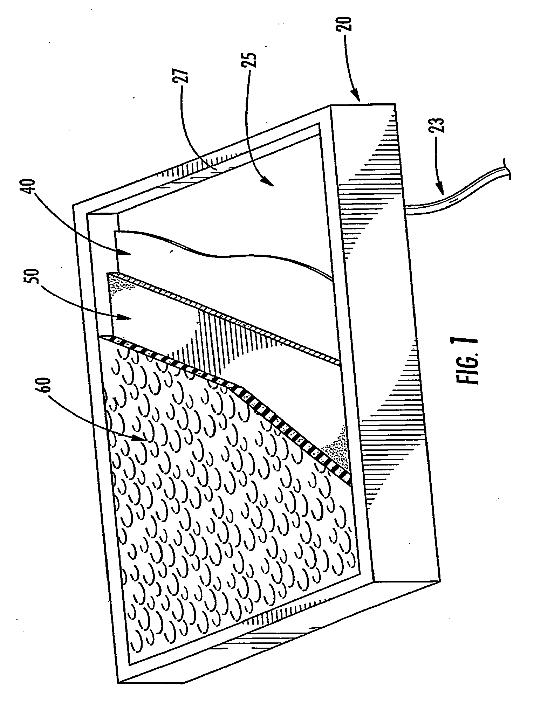

An example of such a mold is provided in FIG. 1, which shows a mold with a mattress thereon prepared according to the method described above. The individual components of the mattress are cut away to reveal detail of the underlying elements. In FIG. 1, the mold **20** is a vacuum-assist mold and includes a vacuum tube **23** attached to the mold **20** and exiting therefrom to suitable vacuum means (not shown). The mold **20** has an interior surface **25** formed by sidewalls **27** and is adapted for receiving the materials used in preparing the mattress, said sidewalls **27** having a height useful to define a cavity for containing at least the desired thickness of the gel layer of the mattress. In the case of a vacuum-assist mold, the mold **20** comprises further components necessary for providing vacuum suction to the interior surface of **25** of the mold **20.** Of course, this method of the invention is not limited to the use of a vacuum-assist mold, and the mold apparatus illustrated in FIG. 1 is provided only as one embodiment of the invention and should not be construed as limiting thereof.

Optionally, the method described above can further comprise providing a release layer prior to inserting the gel material. As illustrated in FIG. 1, the release layer **40** lines the interior surface **25** of the mold **20.** The release layer, according to the invention, can comprise any material useful for facilitating removal of the gel layer from the mold. In certain embodiments, the release layer can further function as a covering for the gel layer to avoid direct contact of the gel layer with an individual or another component of a support apparatus, particularly to avoid the "tacky" feel often characteristic of a gel, even subsequent to complete curing or maturation of the gel material. In certain embodiments, a release layer is not required. For example, the mold could comprise a finish that substantially functions as an inherent release layer, such as in the case of a mold having at least a portion of the interior surface coated with a TEFLON^{®} layer.

In one particular embodiment, the release layer comprises a polymer film, such as a polyurethane film. The polymer film can be of varying thickness, for example in the range of about 0.01 mm to about 2 mm. In one embodiment, the polymer film has a thickness of about 0.025 mm to about 1 mm. Preferably, the polymer film is of a minimum thickness to provide effective release of the gel layer from the mold and also to avoid tearing over long-term use as a covering for the gel layer. In one embodiment, the polymer film is a polyurethane film.

According to another embodiment, the release layer can comprise a liquid coating layer. The material used in the liquid coating can be any liquid material generally recognized as being useful for disallowing attachment of a gel material, such as polyurethane gel, to a surface, such as wood, metal, plastic, or ceramic, that may be used in a mold. Non-limiting examples of materials useful in a liquid coating according to the invention include silicones and fluorocarbons. The liquid coating can be applied to the mold by any means generally recognized as useful in the art including, but not limited to, spraying, brushing, rolling, dipping, and the like.

In another embodiment, the release layer can comprise a waxy layer. Generally, a waxy layer according to the invention can comprise any material recognized as being a wax (*e.g*., a low-melting organic mixture or compound of high molecular weight that is solid at room temperature and generally similar in composition to fats and ils except that it contains no glycerides). Non-limiting examples of waxes useful according to the invention include animal waxes (*e.g*., beeswax), vegetable waxes (*e.g*., carnauba), mineral waxes (*e.g*., fossil or earth waxes, such as silicon based waxes, or petroleum waxes, such as paraffin), ethylenic polymers and polyol ether-esters (*e.g*., CARBOWAX^{®}), chlorinated naphthalenes (*e.g*., halowax), and hydrocarbon-type waxes.

According to yet another embodiment, the release layer can comprise a powder. For example, in one embodiment, the release layer can comprise a non-reactive powder, such as magnesium silicate hydroxide (*i*.*e*., talc), or a similar powder.

When a liquid coating or powder is used as the release layer, the coverage of the release layer is generally limited by the dimensions of the mold. When a polymer film is used, however, it may be useful to use a film having dimensions greater than the dimensions of the mold, thereby allowing the release layer to have free edges extending outside the edges of the gel layer. The free edges of the release layer can be later trimmed or used in further, optional process steps as more fully described below.

Returning to FIG. 1, in reference to the method described above, once the optional release layer **40** is placed in the mold **20,** the gel material is inserted into the mold **20,** over the release layer **40.** The gel material can be any gel material, as described herein. In a particular embodiment, the gel material is a polyurethane gel. The gel material can be inserted into the mold by any means recognized as useful in the art and can vary according to the manufacturing environment. For example, in a continuous, automated process, the gel can be inserted by a flow-regulated nozzle under computer control, wherein a defined volume of gel is flowed or sprayed into the mold, thereby filling the mold with gel to a defined thickness. In a discrete manufacturing process, the gel could be poured into the mold under human control.

Once the mold is filled with the gel material to the desired thickness, the gel can be referred to as the gel layer **50.** While not necessarily required, in certain embodiments, the gel layer **50** is allowed to at least partially cure prior to proceeding with the remaining process steps. By curing, it is intended to mean that the gel is allowed to undergo chemical reactions that may be taking place in the transformation of the gel material from a raw material to its finished, gelled state. For example, in the case of a polyurethane gel, such chemical reactions can include reaction of isocyanate moieties and alcohol moieties to form polyurethane. Curing, which can also be referred to as maturation, may also encompass a physical component wherein the gel material transforms from a liquid to a gelled state. In certain embodiments, it is preferable to allow at least partial curing or maturation to occur such that the gel material begins to take on a certain degree of internal structuring to allow for continuing with the remaining process steps without significantly deforming the gel layer (*i.e.,* interfering with the formation of a gel layer having a substantially smooth or level surface rather than having ridges or valleys). As previously noted, curing is an optional step that is actually preferably omitted in certain embodiments, such as where chemical bonding between the gel layer and another layer is desired.

After formation of the gel layer, the present method further comprises affixing a cover layer to the gel layer. The cover layer can comprise any material useful for providing additional structure or support to the gel layer or any material useful for simply acting as a barrier layer between the gel layer and another layer or a user. For example, the cover could comprise a textile layer, a foam layer, a natural material, such as leather, a synthetic material, or the like. In further embodiments, the cover layer can also be a material otherwise useful as a release layer, such as polymer film, a textile layer, a liquid coating layer, a waxy layer, or a powder layer.

As illustrated in FIG. 1, the cover layer comprises a foam layer **60,** which has a length and width substantially corresponding to the length and width of the gel layer **50;** however, the foam layer **60** can have a variable thickness. For example, in certain embodiments, such as preparation of a mattress topper, is may be desirable for the foam layer to be of minimal thickness (*e.g*., less than or equal to the thickness of the gel layer) to emphasize the benefits of the gel layer without imparting unnecessary bulk to the mattress topper. In other embodiments, such as preparation of a mattress, it may be desirable for the foam layer to be of a greater thickness to impart an overall thickness approaching the thickness of a conventional mattress.

As used herein, affixing is intended to refer to any method of fastening, joining, or attaching the gel layer to the foam layer that may be recognized as useful. Affixing the layers can comprise a physical bonding of the layers as well as a chemical bonding of the layers. Non-limiting examples of physical bonding whereby the layers are affixed include gluing, stitching, and welding. Furthermore, the affixation of the layers can be facilitated solely by the inherent "tackiness" of the gel layer. Chemical bonding of the layers can occur in any process wherein the gel layer and the foam layer comprise free reactive groups capable of reacting with one another. For example, the gel layer may comprise a polyurethane gel material, and the foam layer may comprise a polyurethane foam material. The reaction of isocyanate groups in one layer with alcohol groups in the other layer would be expected to lead to chemical bonding between the layers. Such chemical bonding is further described in Published U.S. Patent Application No. 2001/0018466, which is incorporated herein by reference in its entirety.

In addition to the above steps, according to one embodiment, the method may further comprise affixing the free edges of the release layer, when applicable, to the gel layer and/or the cover layer. Such affixing can be accomplished by any means recognizable as useful including, but not limited to gluing, stitching, and welding.

According to another embodiment of the invention, the method further comprises combining the cover layer and the gel layer with one or more additional layers. The additional support layer can include any type of material generally recognized in the art as being useful for providing support to at least a portion of the body of a user. For example, the additional support layer can comprise a layer of foam, which can take on any of the various embodiments generally useful for providing a cushioning effect or a supportive effect. The additional support layer can also comprise springs, which are recognized as being useful for providing support to the body. The layer of springs can take on any embodiment known in the art for providing effective support, while also providing comfort for the user. For example, the spring layer can comprise a series of springs that are at least partially interconnected. Furthermore, the spring layer can comprise a series of springs that are present as separate coils. Further additional embodiments of spring layers are also encompassed by the present invention, which is not intended to be limited by the examples provided above. Further, the additional layers can be affixed to one or both of the gel layer and the cover layer. Moreover, affixing the additional layer is not required, but it can rather be merely associated with the gel layer and the cover layer in a readily separable fashion. For example, the additional layer could comprise a cavity foam, and the support apparatus formed of the gel layer and the cover layer could be prepared as an insert for the cavity in the foam. Non-limiting examples of additional layers for combination with the gel layer and the cover layer include a foam layer, a spring layer, a textile layer, a gas layer, a wood layer, a metal layer, a plastic layer, and combinations thereof.

In addition to the use of conventional molds, the "mold" of the present invention can also be described in a broader sense. For example, in one embodiment, the invention is directed to a method of preparing a support apparatus, such as a mattress, wherein the mold comprises a foam piece having a surface with one or more cavities formed therein. Accordingly, the method can comprise inserting a gel material into the cavities of the foam piece, thereby forming a support apparatus comprising a gel layer and a foam layer, wherein the foam layer also serves as the mold for the gel. The method can include further steps depending upon the type of apparatus being prepared. For instance, in one embodiment, the method can further comprise at least partially curing the gel layer. In another embodiment, the method can further comprise affixing a second foam layer to the gel layer. The second foam layer may be of dimensions useful for covering the gel layer, or the second foam layer may be of large dimensions, such as being useful for covering substantially the entire surface of the foam layer, including the gel layers formed therein. The invention can still further comprise applying a covering layer (particularly to the gel layer), such as a polymer film, a textile layer, or a liquid or powder coating layer. Moreover, the method can encompass combination with one or more further support layers, such as previously described herein.

In further embodiments, the mold can comprise still further materials. In a specific embodiment, the mold comprises one or more layers of a support material having one or more cavities formed therein for receiving the gel material. For example, the mold can simply be a foam piece as described above, wherein the foam has a defined average thickness and has a surface with one or more cavities formed therein. In another embodiment, the mold comprises a textile layer having one or more cavities formed therein. In still another embodiment, the mold comprises a sandwich textile comprising a foam layer between a first textile layer and a second textile layer, wherein the foam layer has one or more cavities formed therein.

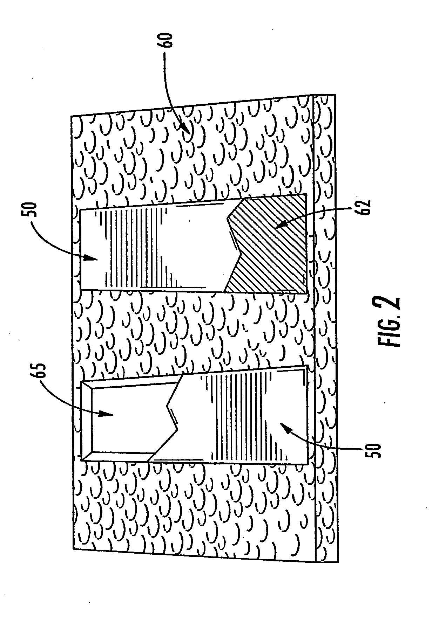

One embodiment of a support apparatus prepared according to this method of the invention is illustrated in FIG. 2. As seen therein, the apparatus prepared according to the invention comprises a foam layer **60** having a surface with two cavities (left and right) formed therein. The left cavity **65** is filled with a gel layer **50** that is partially cut away to reveal the cavity **65.** The right cavity is also filled with a gel layer, but the gel layer is covered with a cover layer **62.** The cover layer **62** is shown partially cut away to reveal the underlying gel layer **50.**

When performing the method according to this embodiment of the invention, it is particularly useful for the foam layer to be of a substantial thickness for imparting structure to the apparatus. For example, in one embodiment, the foam layer has a thickness of at least about 5 cm. In further embodiments, the foam layer has a thickness of at least about 6 cm, at least about 7 cm, at least about 8 cm, at least about 9 cm, and at least about 10 cm.

As in the embodiments described above, the cover layer can comprise a variety of different materials. For example, the cover layer could comprise a textile layer, a film layer, a foam layer, a powder layer, a natural material, such as leather, a synthetic material, or the like. In a particular embodiment, the cover layer comprises a second foam layer.

When a second foam layer is used as the cover layer, it is generally preferable for the second foam layer to be of a thickness such that the beneficial properties of the gel layer are not negated by the foam. For example, in one embodiment, the second foam layer has a thickness of less than about 5 cm. In further embodiments, the second foam layer has a thickness of less than about 4 cm, less than about 3 cm, or less than about 2 cm. In yet further embodiments, the second foam layer has a thickness of about 0.25 cm to about 5 cm, about 0.5 cm to about 4 cm, or about 0.75 cm to about 3 cm.

The foam layer can further be characterized by the shape, positioning, and dimensions of the cavities formed therein. For example, the cavities may substantially cover the top surface of the foam as one continuous cavity or a plurality of cavities. Alternately, the cavities may be formed in strategic positions in the foam layer, such as to substantially correspond to certain body parts of a user or to impart specific beneficial effects. Moreover, the cavities can take on specific shapes, such as to correspond to the shape of a specific body part of a user generally or to again impart beneficial properties.

In one embodiment, the cavities formed in the foam layer have a depth of about 10% to about 90% of the average thickness of the foam layer. More particularly, the cavities have a depth of about 20% to about 80% or about 30% to about 70% of the average thickness of the foam layer. In particular embodiments, the cavities formed in the foam layer have a depth of about 0.25 cm to about 20 cm, about 0.5 cm to about 18 cm, about 1 to about 18 cm, about 2 cm to about 17 cm, about 3 cm to about 16 cm, and about 5 cm to about 15 cm. Moreover, the depth of the cavities can vary on the same foam layer. For instance, a foam layer could comprise two or more cavities, each having different depths. Likewise, the foam layer could comprise a single cavity, wherein the depth of the cavity varies within the cavity.

The foam layer can still further be characterized by the percentage of the surface area of the foam layer encompassed by the cavities. In one embodiment, the cavities formed in the surface of the foam comprise about 1% to about 95% of the surface area of the foam layer. In further embodiments, the cavities comprise about 5% and about 95% of the surface area of the foam layer, about 10% to about 95%, about 15% to about 95%, about 20% to about 95%, about 25% to about 95%, about 30% to about 95%, or about 50% to about 95% of the surface area of the foam layer. In still further embodiments, the cavities comprise at least about 5%, at least about 10%, at least about 25%, at least about 50%, or at least about 75% of the surface area of the foam layer.

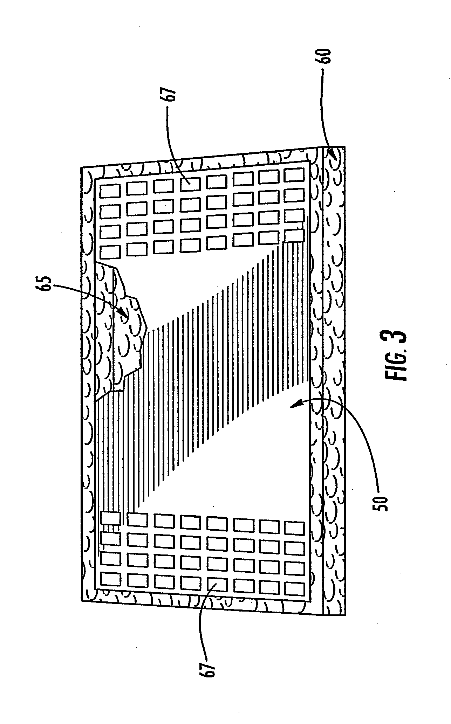

Another embodiment of a support apparatus prepared according to this method of the invention is illustrated in FIG. 3. As shown therein, a foam layer **60** is used as a mold and has a cavity **65** formed therein (revealed in the cut away portion of the gel layer) to receive the gel layer **50.** As seen in this embodiment, the gel layer **50** can encompass a significant percentage of the surface of the foam layer **60.** The foam layer **60** further comprises a series of raised portions **67** formed near the ends of the foam layer **60** wherein the foam material has only been partially removed (*i.e.,* being covered with only a thin layer of gel) or has not been removed at all (as in the embodiment of FIG. 3). This further illustrates the highly customizable nature of the invention in the ability to prepare a variety of apparatus conformations of the gel layer and the foam layer merely by altering the cavity formation in the foam layer.

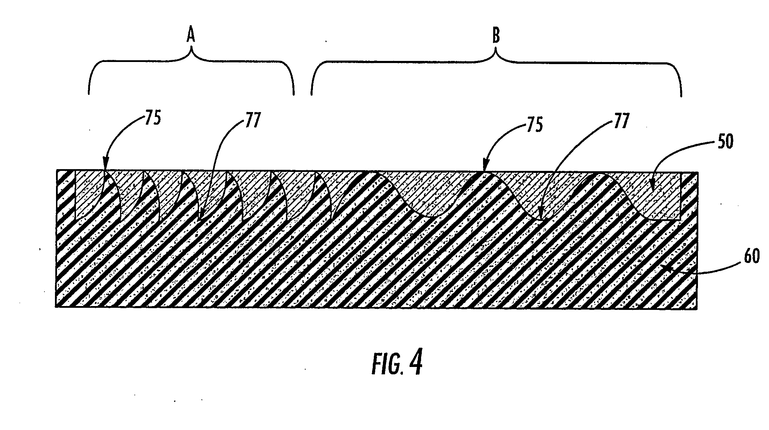

In another embodiment of the invention, the foam layer can be convoluted. A support apparatus prepared according to one method of the invention using convoluted foam is illustrated in FIG. 4, which provides a cross-sectional view of the apparatus. As seen therein, the surface of the foam layer **60** is convoluted, thereby providing a plurality of recesses for receiving the gel material. By convoluted is intended to mean that the surface of the foam has been shaped to have a pattern, generally a repeating pattern, wherein the surface is characterized by having ridges **75** and recesses **77,** as illustrated in FIG. 4. In some embodiments, convoluted can further mean that the foam is patterned such that at least a portion of the foam folds back upon itself.

Convoluted foam for use in the present invention can be prepared in a variety of process, such as would be recognizable to the skilled artisan. Accordingly, the convoluted surface of the foam layer can take on a variety of conformations. For example, in FIG. **4****,** portion **A** of the foam is shown having crest, or fin-like ridges **75** with relatively narrow recesses **77** between the ridges **75.** Alternatively, portion **B** of the foam illustrates more of a sinusoidal wave-like pattern, wherein the ridges **75** are more widely spaced by the recesses **77.** Of course, as previously noted, these embodiments are only illustrative of the various convoluted surfaces that could be formed in the foam layer.

The gel layer **50** in FIG. 4 is shown as filling the area between the ridges of the convoluted foam layer **60.** In further embodiments, the gel material can be applied to the foam layer **60** in an amount such that the gel layer **50** only partially fills the area between the ridges **75** of the foam layer **60.** Moreover, the gel material could be applied in an amount such that the gel layer completely fills the area between the ridges **75** of the foam layer **60** and further rises above the ridges **75.**

In one embodiment, the method comprises providing a foam layer comprising a foam piece having a surface that is at least partially convoluted and applying a gel material to the convoluted surface of the foam layer to form a gel layer thereon. The method can further comprise affixing a cover layer (such as a second foam layer) to the gel layer. Optionally, the gel layer can be at least partially cured prior to affixing the cover layer to the gel layer.

As previously described herein, the support apparatus prepared according to the methods of the present invention generally comprises a gel layer and a second layer, such as a cover layer. In specific embodiments, the cover layer comprises a foam layer. In further embodiments, the apparatus comprises a foam layer, a gel layer, and optional further layers, particularly a cover layer. When the apparatus comprises a foam layer and a gel layer, the cover layer can be applied to the gel layer, or to the apparatus overall. Likewise, when the apparatus comprises a gel layer and a cover layer, the cover layer can be capable of covering only a top surface of the gel layer or completely surrounding the gel layer. Moreover, the apparatus can comprise a gel layer, a cover layer (such as a foam layer), and a further cover layer.

The cover layer can generally comprise any type of material commonly used in coverings for the various types of support apparatuses encompassed by the invention. Such coverings include natural and synthetic materials. Further, such coverings can also include padding. For example, when the support apparatus is a mattress, the covering can be a padded mattress topper. Further, any type of upholstering material can be used as the cover in the present invention. Accordingly, the presence of the gel layer in no way limits the types of covers available for use in covering the support apparatus prepared according to the methods of the invention. Furthermore, other types of coverings are also encompassed by the invention. For example, the covering can comprise a film, such as a polyurethane film, a coating, such as a polymer that is non-reactive or non-tacky in a dried or cured state, or a foam. Additionally, the cover layer can include texturing, thereby providing a three-dimensional effect to the cover layer.

As noted above, the apparatus prepared according to the invention can be customized through management of shaping or cavity formation in the foam layer. For example, different levels of support and comfort can be achieved through varying combinations of gel surface area, cavity shape, cavity placement, and cavity depth. Most generally, the foam layer can comprise a single cavity covering only a small percentage or almost all of the surface area of the foam layer. The foam layer can also comprise a complex pattern of cavities formed across the surface of the foam layer. Moreover, the cavities can beneficially be positioned for strategic and therapeutic benefits. For example, in one embodiment, wherein the method of the invention comprises preparation of a mattress, the cavities formed in the foam layer can be arranged in one or more areas of the foam layer corresponding to a particular body part of a potential user of the mattress. In particular, the cavity may correspond to trunk area of a user to allow for beneficial contouring of the gel layer to the body (particularly the back) of the user.

This method of the invention is particularly adaptable for continuous manufacturing processes. For example, a single foam piece could be carried along a process line. At one station, the appropriate cavities could be formed, at a station down the line, the gel could be inserted into the cavities, at yet another station, optional further layers could be applied to the gel layer, and at still another station the individual apparatuses could be cut free from the continuous foam. Similar manufacturing methods could be particularly adapted to methods incorporating convoluted foam layers.

The present invention can further be adapted to "stop-and-go" manufacturing according to certain methods encompassed by the invention. For instance, the method can comprise the use of a conventional mold, wherein the components of the apparatus to be prepared are place in the mold, allowed to cure or foam, and then removed from the mold after a suitable amount of time.

Accordingly, in one embodiment the invention includes a method comprising providing a mold having two discrete regions formed therein: one region for receiving and forming a gel layer and one region for receiving and forming a foam layer. A release layer, such as previously described herein, is placed in the mold to facilitate release of the support apparatus from the mold and optionally to form a covering over one or both of the gel layer and the foam layer. Optionally, the mold may be a vacuum-assist mold. As previously noted, the release layer can be optionally omitted, such as in methods wherein the mold has an inherent release capability.

With the release layer in place, the gel material is inserted into the mold. At this stage, the gel material may be allowed a certain amount of time for curing. However, in certain embodiments, the method comprises proceeding immediately to the next step, which comprises inserting a foam material into the mold, over the gel layer. Preferably, the mold is a closed mold, and the remaining portion of the mold is applied while the foam layer and the gel layer are allowed to cure. While the gel layer may be at least partially cured prior to insertion of the foam material, it is beneficial in certain embodiments for the gel material to remain at least partially uncured upon insertion of the foam material to allow for chemical bonding between the foam layer and the gel layer.

As previously noted, the foam material used in the methods of the invention, particularly methods wherein the foam is formed in situ, can comprise any type of foam material generally recognized as useful in the field. For example, in certain embodiments, polyurethane foams are particularly preferred. However, other foams could also be used. For instance, latex foams could also be used according to the invention, both during in situ formation of a foam layer or in methods wherein a previously prepared foam layer is used in preparing a support apparatus.

In another embodiment, the invention generally comprises preparing a support apparatus according to a method comprising the following steps: preparing a gel layer comprising a first surface and an opposing surface and having a release layer affixed to at least one of the surfaces; preparing a foam layer having a surface adapted for receiving at least a portion of the gel layer; and affixing the gel layer to the foam layer. As previously noted, the affixing step can comprise various methods, such as gluing, stitching, welding, and combinations thereof. Accordingly, it is possible, according to the invention, to prepare various components of the support apparatus separately and then combine the individual components into a completed apparatus.

Many modifications and other embodiments of the inventions set forth herein will come to mind to one skilled in the art to which these inventions pertain having the benefit of the teaching presented in the foregoing descriptions. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A method for preparing a support apparatus comprising a gel layer, said method comprising:
- providing a mold (20);
- optionally placing a release layer (40) in the mold;
- inserting a gel material (50) into the mold, thereby forming a gel layer;
- optionally, at least partially curing the gel layer; and
- affixing a cover layer (62) to the gel layer;
**characterised in that** the gel material comprises a gel having a hardness in the range of about 0.5 kPa to about 50 kPa when measured according to the method of ISO 3386-1, and wherein the gel material exhibits a hysteresis of about 15% to about 80%.

2. The method according to claim 1, wherein the release layer is placed in the mold and comprises a material selected from the group consisting of a polymer film, a textile layer, a liquid coating layer, a waxy layer, and a powder layer.

3. The method according to claim 2, wherein the release layer comprises a material having a free edge, and wherein the method further comprises affixing the free edge of the material to the gel layer.

4. The method according to claim 3, wherein said step of affixing the free edge of the material to the gel layer comprises a method selected from the group consisting of gluing, stitching, and welding.

5. The method according to one or more of the preceding claims, wherein the gel material comprises a polyurethane gel.

6. The method according one or more of the preceding claims, wherein the gel material comprises u content of one or more fillers.

7. The method according to claim 6, wherein the one or more fillers are selected from the group consisting of cork pieces, cork flour, wood pieces, wood chips, foam flakes, textile fibers, textile pieces, paraffins, hollow spheres, synthetic microspheres, mineral particles, grass heads, gasses, active agents, nanoparticles, and mixtures thereof.

8. The method according to one or more of the preceding claims, wherein said step of affixing the cover layer to the gel layer comprises a method selected front the group consisting of gluing, stitching, and welding.

9. The method according to one or more of the preceding claims, wherein said cover layer comprises a material selected from the group consisting of a foam layer, a polymer film, a textile layer, a liquid coating layer, a waxy layer, and a powder coating layer.

10. The method according to one or more of the preceding claims, wherein the mold comprises a vacuum-assist mold.

11. The method according to one or more of the preceding claims, wherein the mold comprises one or more layers of a support material having one or more cavities formed therein for receiving the gel material.

12. The method according to claim 11, wherein the mold comprises a foam layer comprising a foam piece having a defined average thickness and having a surface with one or more cavities formed therein.

13. The method according to claim 12, wherein the one or more cavities encompass an area comprising about 1% to about 95% of the surface of the foam piece.

14. The method according to claim 12 or 13, wherein the one or more cavities are in an area corresponding to a specific area of the body of a potential user of the mattress.

15. The method according one or more of the claims 12 to 14, wherein the one or more cavities are arranged in a specific pattern across the surface of the foam piece.

16. The method according one or more of the claims 12 to 15, wherein the one or more cavities have a depth of about 10% to about 90% of the average thickness of the foam layer.

17. The method according to one or more of the claims 11 to 16, wherein the mold comprises a textile layer having one or more cavities formed therein.

18. The method according to one or more of the claims 11 to 17, wherein the mold comprises a sandwich textile comprising a foam layer between a first textile layer and a second textile layer, said foam layer having one or more cavities formed therein.

19. The method according to one or more of the preceding claim, further comprising combining at least the gel layer and the cover layer with one or more additional layers selected from the group consisting of a foam layer, a spring layer, a textile layer, a gas layer, a wood layer, a metal layer, u plastic layer, and combinations thereof.

20. The method according to one or more of the preceding claims, wherein the mold comprises a foam piece with a surface that is at least partially convoluted.

21. The method according to claim 1, wherein said mold has one or more portions adapted for receiving a gel material and a portion adapted for receiving a foam material, said method comprising the steps of:
- inserting said gel material into the one or more portions of the mold adapted for receiving the gel material;
- inserting a foam material into the portion of the mold adapted for receiving the foam material ;
- curing the gel material to form a gel layer; and
- foaming the foam material to form a foam layer.

22. The method according to claim 21, wherein the step of curing the gel material is carried out prior to the step of inserting the foam material into the mold.

23. The method according to claim 21 or 22, wherein the steps of curing the gel material and foaming the foam material are carried out simultaneously.

24. The method according to one or more of the claims 21 to 23, comprising the step of placing in the mold a release layer selected from the group consisting of a polymer film, a liquid coating layer, and a powder coating layer.

25. The method according to one or more of the claims 21 to 24, wherein the foam material comprises u polyurethane foam.

26. The method according to one or more of the claims 21 to 25, wherein the foam material comprises a latex foam.

27. The method according to claim 1, wherein said gel layer comprises a top surface and a bottom surface and has a release layer affixed to at least one of said top surface and said bottom surface, said method comprising the steps of:
- preparing a foam layer having a surface adapted for receiving at least a portion of said gel layer; and
- affixing said gel layer to said foam layer by a method selected from the group consisting of gluing, stitching, welding, and combinations thereof.

28. A mattress component obtainable by the method according to one or more of the claims 1 to 27.

29. A support apparatus obtainable by the method according to one or more of the claims 1 to 27, wherein the support apparatus is dimensioned to be a mattress.

30. A pillow obtainable by the method according to one or more of the claims I to 27.

31. A seating apparatus obtainable by the method according to one or more of the claims 1 to 27.

## Patentansprüche

1. Methode für die Vorbereitung eines Stützapparats mit einer Gelschicht, wobei diese Methode Folgendes umfasst:
- die Lieferung eines Formwerkzeugs (20);
- die optionale Positionierung einer Freigabeschicht (40) im Formwerkzeug;
- die Einfügung eines Gelmaterials (50) in das Formwerkzeug und somit die Bildung einer Gelschicht;
- optional die wenigstens teilweise Vulkanisierung der Gelschicht; und
- die Fixierung einer Deckschicht (62) auf der Gelschicht;
**dadurch gekennzeichnet, dass** das Gelmaterial ein Gel mit nach Methode ISO 3386-1 gemessener Härte zwischen circa 0,5 kPa und circa 50 kPa enthält, und dass dieses Gelmaterial eine Hysterese zwischen circa 15 % und circa 80 % aufweist.

2. Methode gemäß Patentanspruch 1, bei der die Freigabeschicht im Formwerkzeug positioniert ist und ein Material enthält, das aus der einen Polymerfilm, eine Gewebelage, eine flüssige Überzugsschicht, eine Wachsschicht und eine Pulverschicht enthaltenden Gruppe ausgewählt wurde.

3. Methode gemäß Patentanspruch 2, bei der die Freigabeschicht ein eine freie Kante aufweisendes Material enthält, wobei die Methode auch die Fixierung der freien Kante des Materials an der Gelschicht umfasst.

4. Methode gemäß Patentanspruch 3, bei der die genannte Fixierungsphase der freien Kante des Materials an der Gelschicht eine aus der Verleimung, Vernähen und Schweißen enthaltenden Gruppe ausgewählte Methode umfasst.

5. Methode gemäß einem oder mehreren der vorstehenden Patenansprüche, bei der das Gelmaterial ein Polyurethangel umfasst.

6. Methode gemäß einem oder mehreren der vorstehenden Patentansprüche, bei der das Gelmaterial eine oder mehrere Füllstoffe umfasst.

7. Methode gemäß Patentanspruch 6, bei der eine oder mehrere Füllstoffe aus der Gruppe ausgewählt werden, die Korkstücke, Korkmehl, Holzstücke, Holzspäne, Schaumflocken, Textilfasern, Textilteile, Paraffine, Hohlkugeln, synthetische Mikrokugeln, Mineralpartikel, Glasperlen, Gas, aktive Wirkstoffe, Nanopartikel und Mischungen daraus umfasst.

8. Methode gemäß einem oder mehreren der vorstehenden Patenansprüche, bei der die genannte Fixierungsphase der Überzugsschicht der Gelschicht eine aus der Verleimung, Vernähen und Schweißen enthaltenden Gruppe ausgewählte Methode umfasst.

9. Methode gemäß einem oder mehreren der vorstehenden Patenansprüche, bei der die besagte Überzugsschicht ein Material umfasst, das aus der eine Schaumlage, einen Polymerfilm, eine Textillage, eine flüssige Überzugsschicht, eine Wachsschicht und eine Pulverüberzugsschicht umfassenden Gruppe ausgewählt wurde.

10. Methode gemäß einem oder mehreren der vorstehenden Patenansprüche, bei der das Formwerkzeug eine Vakuumformwerkzeug umfasst.

11. Methode gemäß einem oder mehreren der vorstehenden Patenansprüche, bei der das Formwerkzeug eine oder mehrere Lagen eines Stützmaterials mit einer oder mehreren, internen Hohlräumen zur Aufnahme des Gelmaterials umfasst.

12. Methode gemäß Patentanspruch 11, bei der das Formwerkzeug eine Schaumschicht mit einem Schaumteil von bestimmter Durchschnittsstärke und einer Oberfläche mit einem oder mehreren in ihr gebildeten Hohlräumen enthält.

13. Methode gemäß Patentanspruch 12, bei der der eine oder die mehreren Hohlräume einen Bereich umfassen, der von circa 1 % bis 95 % der Oberfläche des Schaumteils darstellen.

14. Methode gemäß Patentanspruch 12 oder 13, bei der der eine oder die mehreren Hohlräume sich in einem Bereich befinden, der einem spezifischen Körperbereich eines potenziellen Benutzers der Matratze entspricht.

15. Methode gemäß einem oder mehreren der vorstehenden Patentansprüche von 12 bis 14, bei der der eine oder die mehreren Hohlräume gemäß einem spezifischen Schema an der Oberfläche des Schaumteils angeordnet sind.

16. Methode gemäß einem oder mehreren der vorstehenden Patentansprüche von 12 bis 15, bei der der eine oder die mehreren Hohlräume eine Tiefe von circa 10 % bis circa il 90 % der durchschnittlichen Stärke der Schaumschicht aufweisen.

17. Methode gemäß einem oder mehreren der vorstehenden Patentansprüche von 11 bis 16, bei der das Formwerkzeug eine Textillage mit einem oder mehreren in ihr gebildeten Hohlräumen enthält.

18. Methode gemäß einem oder mehreren der vorstehenden Patentansprüche von 11 bis 17, bei der das Formwerkzeug eine sandwichförmige Textillage umfasst mit einer Schaumschicht zwischen einer ersten und einer zweiten Textillage, wobei diese Schaumschicht einen oder mehrere in ihr gebildete Hohlräumen enthält.

19. Methode gemäß einem oder mehreren der vorstehenden Patentansprüche, des Weiteren die Kombination von wenigstens der Gelschicht und der Überzugsschicht mit einer oder mehreren Zusatzlagen aus der wenigstens eine Schaumschicht, eine Federlage, eine Textillage, eine Gasschicht, eine Holzschicht, eine Metallschicht, eine Kunststoffschicht sowie Kombinationen aus diesen enthaltenden Gruppe umfassend.

20. Methode gemäß einem oder mehreren der vorstehenden Patentansprüche, bei der das Formwerkzeug ein Schaumstück mit einer Oberfläche umfasst, deren Oberfläche wenigstens teilweise gewunden ist.

21. Methode gemäß Patentanspruch 11, bei der das besagte Formwerkzeug einen oder mehreren Abschnitt aufweist, die zur Aufnahme eines Gelmaterials geeignet sind, sowie einen Abschnitt für die Aufnahme eines Schaumstoffs, wobei diese Methode folgende Phasen umfasst:
- Einsetzen des besagten Gelmaterials in einen oder mehrere Abschnitte des Formwerkzeugs für die Aufnahme des Gelmaterials;
- Einsetzen eines Schaumstoffs in den Abschnitt des Formwerkzeugs für die Aufnahme des Schaumstoffs;
- Vulkanisierung des Gelmaterials zur Bildung der Gelschicht; und
- Schäumen des Schaumstoffs zur Bildung einer Schaumschicht.

22. Methode gemäß Patentanspruch 21, bei der die Phase der Vulkanisierung des Gelmaterials vor der Phase des Einsetzens des Schaumstoffs in das Formwerkzeug ausgeführt wird.

23. Methode gemäß Patentanspruch 21 oder 22, bei der die Phasen der Vulkanisierung des Gelmaterials und des Schäumen des Schaumstoffs gleichzeitig erfolgen.

24. Methode gemäß einem oder mehreren der vorstehenden Patentansprüche von 21 bis 23, die die Phase der Positionierung einer aus der aus einem Polymerfilm, einer flüssigen Überzugsschicht und einer Pulverüberzugsschicht bestehenden Gruppe ausgewählten Freigabeschicht in das Formwerkzeug umfasst.

25. Methode gemäß einem oder mehreren der vorstehenden Patentansprüche von 21 bis 24, bei der der Schaumstoff einen Polyurethanschaum umfasst.

26. Methode gemäß einem oder mehreren der vorstehenden Patentansprüche von 21 bis 25, bei der der Schaumstoff einen Latexschaum umfasst.

27. Methode gemäß Patentanspruch 1, bei der die besagte Gelschicht eine obere und eine untere Oberfläche umfasst sowie eine Freigabeschicht aufweist, die an wenigstens einer aus der oberen bzw. der unteren Oberfläche fixiert ist, wobei die besagte Methode folgende Phasen umfasst:
- Vorbereitung einer Schaumschicht mit einer Oberfläche, die geeignet ist, wenigstens einen Abschnitt der besagten Gelschicht aufzunehmen; und
- Fixierung der besagten Gelschicht an der besagten Schaumschicht mit einer aus der Verleimung, Vernähen und Schweißen oder Kombinationen hieraus enthaltenden Gruppe ausgewählte Methode.

28. Matratzenkomponente, erzielbar mit der Methode gemäß einem oder mehreren der vorstehenden Patentansprüche von 1 bis 27.

29. Stützapparat, erzielbar mit der Methode gemäß einem oder mehreren der vorstehenden Patentansprüche von 1 bis 27, bei der der Stützapparat so dimensioniert ist, dass er eine Matratze darstellt.

30. Kissen, erzielbar mit der Methode gemäß einem oder mehreren der vorstehenden Patentansprüche von 1 bis 27.

31. Sitzvorrichtung, erzielbar mit der Methode gemäß einem oder mehreren der vorstehenden Patentansprüche von 1 bis 27.

## Revendications

1. Méthode pour la préparation d'un appareillage de support comprenant une couche de gel, ladite méthode comprenant :
- la fourniture d'un moule (20) ;
- le positionnement en option d'une couche de dépouille (40) dans le moule ;
- l'introduction d'un matériau en gel (50) dans le moule, formant par conséquent une couche de gel ;
- en option, la vulcanisation au moins partielle de la couche de gel ; et
- l'application d'une couche de revêtement (62) sur la couche de gel ;
**caractérisée en ce que** le matériau en gel comprend un gel ayant une dureté comprise entre environ 0,5 kPa et environ 50 kPa mesurée suivant la méthode ISO 3386-1, et où le matériau en gel présente une polymérique comprise entre environ 15 % et environ 80 %.

2. Méthode selon la revendication 1, **caractérisée en ce que** ladite couche de dépouille est positionnée dans le moule et comprend un matériau sélectionné dans le groupe comprenant une pellicule polymérique, une couche textile, une couche de revêtement liquide, une couche de cire et une couche de poudre.

3. Méthode selon la revendication 2, **caractérisée en ce que** ladite couche de dépouille comprend un matériau ayant un bord libre et où la méthode comprend aussi l'application du bord libre du matériau à la couche de gel.

4. Méthode selon la revendication 3, **caractérisée en ce que** ladite phase d'application du bord libre du matériau à la couche de gel comprend une méthode sélectionnée dans le groupe comprenant l'encollage, la couture et le soudage.

5. Méthode selon une ou plus des revendications précédentes, **caractérisée en ce que** le matériau en gel comprend un gel polyuréthane.

6. Méthode selon une ou plus des revendications précédentes, **caractérisée en ce que** le matériau en gel comprend un contenu d'une ou plusieurs substance(s) de remplissage.

7. Méthode selon la revendication 6, **caractérisée en ce que** l'une ou plusieurs substances de remplissage sont sélectionnées dans le groupe composé de blocs de liège, farine de liège, morceaux de bois, copeaux de bois, flocons de mousse, fibres textiles, parties textiles, paraffine, billes creuses, microsphères synthétiques, particules minérales, perles de verre, gaz, agents actifs, nanoparticules et leurs mélanges.

8. Méthode selon une ou plus des revendications précédentes, **caractérisée en ce que** ladite phase d'application de la couche de revêtement à la couche de gel comprend une méthode sélectionnée dans le groupe comprenant l'encollage, la couture et le soudage.

9. Méthode selon une ou plus des revendications précédentes, **caractérisée en ce que** ladite couche de revêtement comprend un matériau sélectionné dans le groupe composé d'une couche de mousse, d'une pellicule polymérique, d'une couche textile, d'une couche de revêtement liquide, d'une couche de cire et d'une couche de revêtement en poudre.

10. Méthode selon une ou plus des revendications précédentes, **caractérisée en ce que** ledit moule comprend un moule à vide.

11. Méthode selon une ou plus des revendications précédentes, **caractérisée en ce que** le moule comprend une ou plusieurs couches d'un matériau de support ayant une cavité ou plus formée(s) à l'intérieur pour recevoir le matériau en gel.

12. Méthode selon la revendication 11, **caractérisée en ce que** le moule comprend une couche de mousse comprenant un bloc de mousse d'épaisseur moyenne défini et ayant une surface avec une cavité ou plus formée(s) à l'intérieur.

13. Méthode selon la revendication 12, **caractérisée en ce que** la ou les cavité(s) comprend/comprennent un espace compris entre environ 1 % et 95 % de la surface du bloc de mousse.

14. Méthode selon la revendication 12 ou 13, **caractérisée en ce qu'**une cavité ou plus sont présentes dans un espace correspondant à une zone spécifique du corps d'un utilisateur potentiel du matelas.

15. Méthode selon une ou plus des revendications de 12 à 14, **caractérisée en ce qu'**une cavité ou plus sont disposées selon un schéma spécifique sur la surface du bloc de mousse.

16. Méthode selon une ou plus des revendications de 12 à 15, **caractérisée en ce qu'**une cavité ou plus ont une profondeur comprise entre environ 10 % et environ 90 % de l'épaisseur moyenne de la couche de mousse.

17. Méthode selon une ou plus des revendications de 11 à 16, **caractérisée en ce que** ledit moule comprend une couche textile avec une cavité ou plus formée(s) à l'intérieur.

18. Méthode selon une ou plus des revendications de 11 à 17, **caractérisée en ce que** ledit moule comprend un tissu en sandwich comprenant une couche de mousse entre une première couche de tissu et une deuxième couche de tissu, ladite couche de mousse ayant une cavité ou plus formée(s) à l'intérieur.

19. Méthode selon une ou plus des revendications précédentes, comprenant aussi la combinaison au moins de la couche de gel et de la couche de revêtement avec une couche supplémentaire ou plus sélectionnée(s) dans le groupe composé d'une couche de mousse, une couche à ressorts, une couche de tissu, une couche de gaz, une couche de bois, une couche de métal, une couche de plastique et leurs combinaisons.

20. Méthode selon une ou plus des revendications précédentes, **caractérisée en ce que** ledit moule comprend un bloc de mousse avec une surface qui est au moins partialement enveloppée.

21. Méthode selon la revendication 1, **caractérisée en ce que** ledit moule présente une portion ou plus pouvant recevoir un matériau en gel et une portion pouvant recevoir un matériau en mousse, ladite méthode comprenant les phases suivantes :
- introduction dudit matériau en gel dans une portion ou plus du moule pouvant recevoir le matériau en gel ;
- introduction d'un matériau en mousse dans la portion du moule pouvant recevoir le matériau en mousse ;
- vulcanisation du matériau en gel pour former la couche de gel ; et
- moussage du matériau en mousse pour former une couche de mousse.

22. Méthode selon la revendication 21, **caractérisée en ce que** ladite phase de vulcanisation du matériau en gel est exécutée avant la phase d'introduction du matériau en mousse dans le moule.

23. Méthode selon la revendication 21 ou 22, **caractérisée en ce que** les phases de vulcanisation du matériau en gel et de moussage du matériau en mousse sont exécutés en même temps.

24. Méthode selon une ou plus des revendications de 21 à 23, comprenant la phase de positionnement dans le moule d'une couche de dépouille sélectionnée dans le groupe composé d'une pellicule polymérique, d'une couche de revêtement liquide et d'une couche de revêtement en poudre.

25. Méthode selon une ou plus des revendications de 21 à 24, **caractérisée en ce que** ledit matériau en mousse comprend une mousse polyuréthane.

26. Méthode selon une ou plus des revendications de 21 à 25, **caractérisée en ce que** ledit matériau en mousse comprend une mousse en latex.

27. Méthode selon la revendication 1, **caractérisée en ce que** ladite couche de gel comprend une surface supérieure et une surface inférieure et présente une couche de dépouille appliquée à au moins une surface entre ladite surface supérieure et ladite surface inférieure, ladite méthode comprenant les phases de :
- préparation d'une couche de mousse ayant une surface pouvant recevoir au moins une portion de ladite couche de gel ; et
- application de ladite couche de gel à ladite couche de mousse avec une méthode sélectionnée dans le groupe comprenant l'encollage, la couture, le soudage et leurs combinaisons.

28. Composante de matelas réalisable avec la méthode selon une revendication ou plus des revendications de 1 à 27.

29. Appareillage de support réalisable avec la méthode selon une ou plus des revendications de 1 à 27 où l'appareillage de support est dimensionné pour être un matelas.

30. Coussin réalisable avec la méthode selon une ou plus des revendications de 1 à 27.

31. Appareillage d'assise réalisable avec la méthode selon une ou plus des revendications de 1 à 27.
